# EUROPEAN PATENT SPECIFICATION

(11) **EP 0 314 677 B1**
(45) Date of publication and mention of the grant of the patent: **03.03.1993**
(21) Application number: 87903583.0
(22) Date of filing: 12.05.1987
(51) Int. Cl.: A01D 34/64

(54) **GRASS CUTTER**
RASENMÄHVORRICHTUNG
TONDEUSE A GAZON

(43) Date of publication of application: 10.05.1989
(73) Proprietor: COUNTRY HOME PRODUCTS, INC., Charlotte, VT 05445 (US)
(72) Inventor: RAYMOND, Richard O., Ferrisburg, VT 05473 (US)
(74) Representative: Wenzel, Heinz-Peter, Dipl.-Ing.
(86) International application number: PCT/US87/01059
(87) International publication number: WO 88/08663

(56) References cited:
- FR-A- 2 257 219
- GB-A- 2 183 981
- US-A- 2 632 990
- US-A- 2 669 826
- US-A- 4 077 191
- US-A- 4 189 901
- US-A- 4 378 668
- US-A- 4 442 659
- US-A- 4 452 033
- US-A- 4 625 501

## Description

The invention relates to a grass cutter of the type set out in the preamble of claim 1 as known from US-A-4077191.

Lawn maintenance traditionally been effected using a lawn mower to cut the lawn and a lawn trimmer to trim the edges of the lawn, including areas of vegetation that border fences and buildings. Recently, hand held line trimmers have become popular for performing the trimming operations. However, except on a small lawn, hand held trimmers are impractical to use since they are too heavy to carry around for extended periods of time. Even on a small lawn there is difficulty controlling hand held trimmers. The lack of control results in unevenly cut vegetation and scalping of the ground at the roots of the vegetation. Also, the lack of control problem is often compounded by user fatigue associated with carrying around the hand held trimmer.

There have recently been developments aimed at making a hand held trimmer more suitable for the user and more compatible with the user's needs. Such efforts have included designing wheeled carriages and dollies to be used with trimmers but while these devices have done much to alleviate user fatigue, they have done little to aid the user in controlling and positioning the rotating cutting head. For example, H J Enbusk in US-A-4 442 659 discloses a dolly for a line trimmer that must be held in one hand while the trimmer, which is pivotally mounted to the dolly, is held in the other hand. With this device, each hand performs a separate positioning function resulting in an awkward combination for controlling the cutting head. Also, this device does not confront the problem of having to use two separate machines for maintaining the lawn.

Prior art devices that combine mowing and trimming features in one machine have been previously proposed. Such an apparatus is disclosed by Watrous in US-A-2 669 826, wherein a two wheel lawn mower is disclosed having a forwardly mounted cutting head that is supported on a ground engaging shoe. In Watrous an axle and a housing are pivotally connected, thereby permitting the entire cutting head to swing from side to side with respect to rear wheels and a handle. The plane of cutting remains parallel to the ground in each position of the cutting head. This limits the versatility of the machine, since the angle of the cutting plane cannot be changed.

In US-A-4 077 191 to Pittinger, a filament trimmer/mower is disclosed that includes a four wheel supported frame and has the structure outlined in the preamble of claim 1. Each of the front and rear wheel-and-axle assemblies are pivotally mounted with respect to the frame. Pittinger, however, suffers from the disadvantage that the rotating head is held in a fixed position between the wheels. Therefore, it is difficult to trim the vegetation growing alongside a building or other structure, since the filament line would not normally extend outside the path of travel of the wheels.

It is therefore the task of the present invention to overcome the drawbacks of the prior art cutters by suggesting a structure which permits the performing of a trimming function outside said travel path of the wheels.

According to the invention this task is solved by a grass cutter having the features of claim 1.

Preferably the frame has a top wall extending substantially parallel with the cutting plane; and the second axis of rotation is so disposed that it intersects the plane that includes the top wall at an oblique angle.

Embodiments of the invention can overcome the aforementioned disadvantages of the prior art by providing a two wheeled mower and trimmer that allows an operator to mow a lawn in a usual manner with the cutting plane of the cutting head parallel to the ground and to trim surrounding areas in an improved manner with the cutting plane non-parallel to the ground and with the cutting head shifted laterally or swung closer to one of the wheels.

Thus the cutting head can be positioned parallel to the ground and positioned equidistantly between the wheels so that the apparatus can be used as a mower. Also, in this position the apparatus can be used as a trimmer or the frame and cutting head can be moved with respect to the wheels and the cutting head shifted to a plurality of other trimming positions.

An operator can trim a strip of vegetation growing against a building, fence or other structure at an angle downwardly by shifting the cutting head toward one side or the other while simultaneously changing the cutting plane angle so that the flexible cutting elements extend outside the path of travel of the wheels and cut the vegetation at a downward angle.

To change from a mowing position to any of a plurality of trimming positions an operator can merely tilt the frame through the use of the handle, thereby to reposition the cutting head with respect to the axle and wheels and reposition the cutting plane with respect to the ground.

The axle and wheel assembly are pivoted to the frame in a manner that allows the wheels to turn under the frame while simultaneously allowing the frame to tilt relative to the wheels in response to the tilting of a single handle attached to the frame.

In one embodiment of the invention, an axle having two wheels is pivotally mounted to a frame at an angle such that the pivot axis is oblique relative to the ground, when the apparatus is in the normal operating position. As a result of the angled pivot axis, the front of the frame swings from side to side as the frame is tilted about the longitudinal axis of the frame. In order to facilitate the relative movement between the frame and the wheels, the axle extends through slots provided in the sidewalls of the frame. These slots preferably extend longitudinally in a direction perpendicular to the pivot axis of the axle. As the frame is tilted by applying a torque through the handle, the wheel and axle assembly is caused to turn under the frame.

The degree to which the frame tilts is dependent upon the angle of the pivot axis and correspondingly perpendicular longitudinal direction of the slots. The length of the slots affects the distance which the front of the frame will swing from side to side. Lengthening these slots increases the lateral shift distance, while shortening the slots decreases the distance. Only one handle is needed for an operator to push the apparatus, guide it through standard lawn mower manoeuvres, and position the apparatus in a plurality of trimming positions in which the cutting plane is tilted and the cutting head is swung or shifted. Further the tilting and shifting movement is achieved simultaneously as a result of the torque applied to the frame, about the frames longitudinal axis, through the handle.

The apparatus can include facing corrugated washers interposed between the axle and the frame on the pivot axis. The washers, each fixed to one of the frame and the axle, are urged together by the force of a spring. In order, then, to pivot the axle relative to the frame, a torque of sufficient magnitude is needed to be applied to overcome the force of the spring acting on the facing washers. For each corrugation in the washers a stable relative position is maintained between the frame and the axle. Mowing is usually performed in the position in which the cutting plane is parallel to the ground and the cutting head is spaced equidistantly between the wheels. Trimming can also be conducted in this position, but many additional trimming positions, which are relatively stably maintainable, are made available to the operator.

The invention is diagrammatically illustrated by way of example in the accompanying drawings, in which:-
Figure 1 is a front view of a grass cutter according to the invention partially sectioned to show a power take-off shaft and a cutting head assembly;
Figure 2 is a bottom view of the grass cutter of Figure 1 in a trimming position;
Figure 3 is a front view of the grass cutter of Figure 1 showing the relationship of the cutting head to wheels in a trimming position;
Figure 4 is a partial right side view of the grass cutter of Figure 1 with an engine omitted including a fragmentary sectional view showing one embodiment of an axle mount;
Figure 5 is a partial bottom perspective view of the grass cutter of Figure 1 with the engine omitted;
Figure 6 is a fragmentary sectional view of the front of a frame of the grass cutter of Figure 1 showing a brake assembly; and
Figure 7 is a partial side view of the grass cutter of Figure 1 with the engine omitted included a fragmentary sectional view and showing a second embodiment of an axle mount.

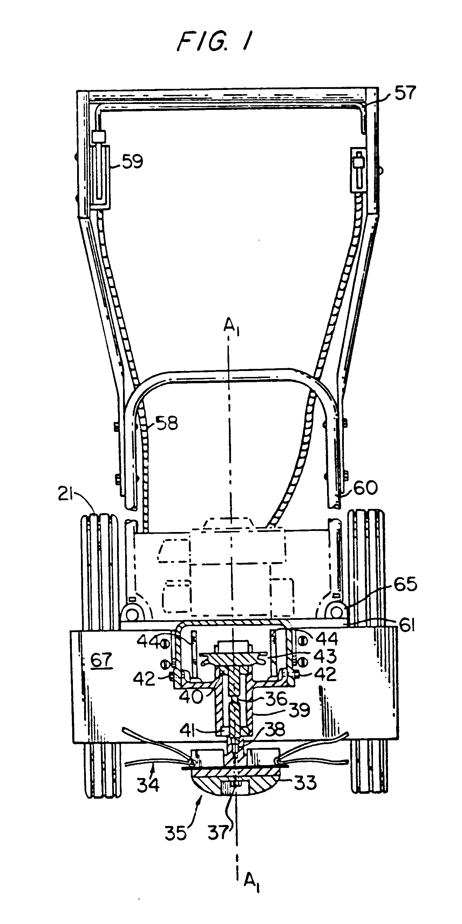

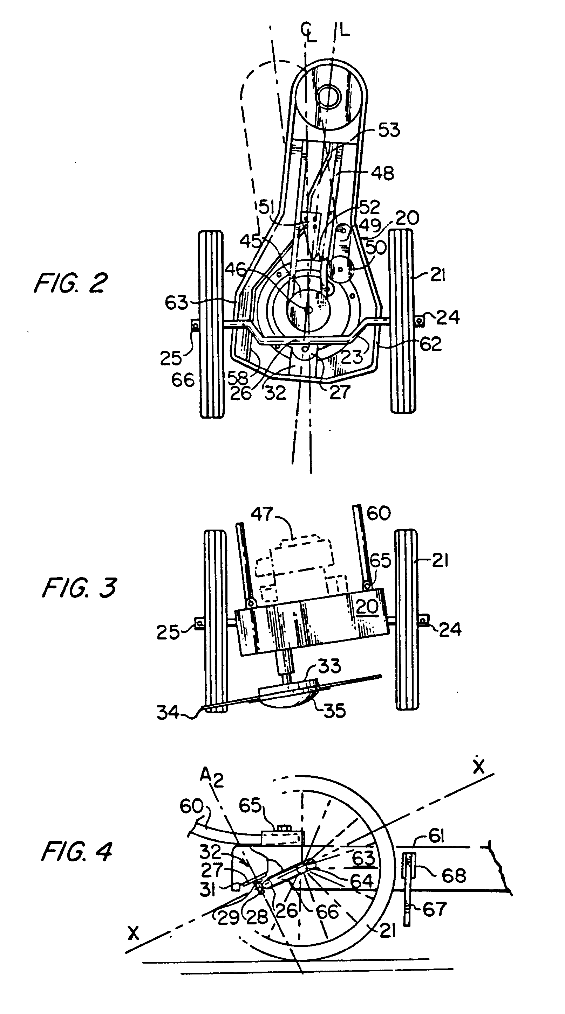

Referring to the drawings and firstly to Figures 1 and 2, a frame 20 is supported by ground engaging wheels 21 and 22 interconnected by an axle 23. Suitable collars 24 and 25 are provided to retain the wheels 21, 22 on the axle 23 in a known manner. The wheels are provided with bearings of any conventional type, not shown, which allow the wheels freely to rotate about the axle.

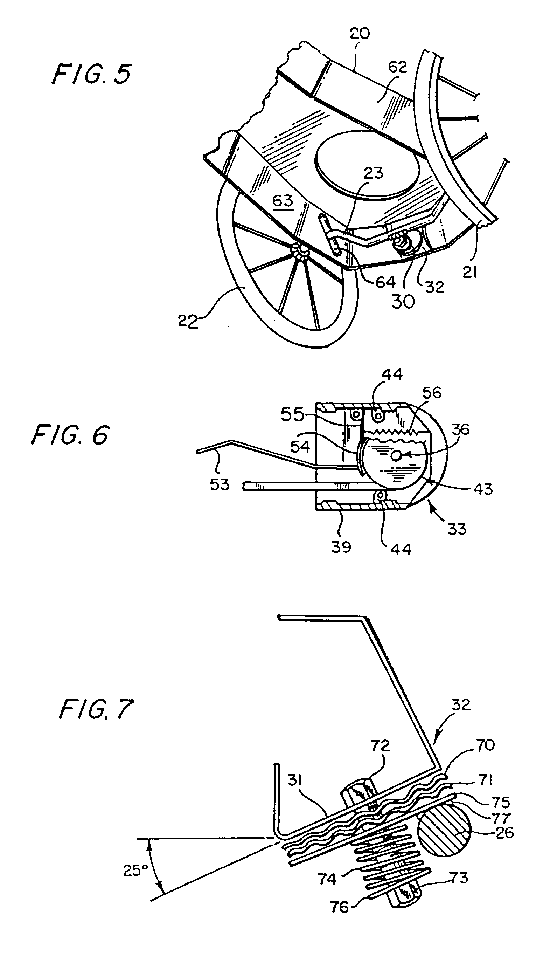

The axle 23 includes a mid-portion 26 which is pivotally mounted to a frame. In a first embodiment shown in Figures 2, 4 and 5, the axle is securely fastened, as by welding, to a washer 27. The washer 27 is allowed freely to rotate about a bolt 28. A nut 29 is threaded onto the bolt 28, but is not so tight as to prevent the washer 27 from turning. The washer 27 can include a collar extension 30, as seen in Figure 5, to which the axle can be further welded for additional support.

As can be seen in Figure 4, the bolt 28 provides an axis of rotation, A2 about which the axle 23 can pivot. The bolt 28 is suitably secured in an end plate 31 of an axle supporting portion 32 of the frame 20. For example, the bolt 28, could be a stud bolt, wherein the end plate 31 would be provided with a threaded bore into which the bolt 28 would be threadedly received. As an alternative construction, the bolt 28 may have a head welded to the end plate 31 or may be turned around so that it is threadedly received in a bore in the end plate so that a nut is not needed.

As shown in Figure 1, in partial section, a cutting head 33 is provided which is rotatable about an axis A1. Suitably secured to the cutting head 33 are flexible cutting elements, such as nylon filaments 34. The particular way in which the filaments are attached to the cutting head does not constitute a part of this invention. As an alternative to fixed length cords, a suitable automatic cord feeding head could be used. The cutting head includes a ground engaging bumper 35 having rounded edges as shown in Figure 1. To rotate the cutting head 33, a power take-off shaft 36 is provided to which the cutting head is drivingly connected. For connecting the cutting head to the power take-off shaft, a bolt 37 can be provided to be threadedly received in a blind bore 38 provided in the lower end of the shaft 36.

A bearing housing 39 is provided to support bearings 40 and 41 in a conventional manner, such as by a press-fit. The bearing housing 39 is secured to the frame 20 by bolts 42. The bearings 40 and 41 allow for free rotation of the shaft 36. Keyed to the shaft 36, or as an integral part thereof, is a pulley 43. The pulley 43 has a "V" groove and can receive a V-type endless flexible transmission belt 48. Belt guides 44 (Figure 6) are provided adjacent the sides of the pulley 43.

As shown in Figure 2, a pulley 45 is provided that is fixed to the drive shaft 46 of a standard internal combustion engine 47. The endless flexible transmission belt 48 transmits the torque of the engine to the power take-off shaft 36. A clutch and brake mechanism is provided that includes an idler arm 49 that is pivotally mounted to the frame 20 at one end and has at its other end an idler pulley 50. A brake actuator 51 is also pivotally mounted to the frame 20 and resiliently connected to the idler arm 49 through a spring 52.

The operation of the brake and clutch mechanism can be better understood with reference to Figures 2 and 6. In Figure 2, it can be seen that a brake arm 53 is connected to the brake actuator 51. In Figure 6 it can be seen that the brake arm 53 is connected to a brake pad 54 engageable with the pulley 43. Offset with respect to the brake pad 54 is a brake pad arm 55 which is pivotally mounted to the frame 20. The arm 55 is spring biased toward the position shown in Figure 6 by a spring 56.

When it is desired to cause rotational movement of the cutting head 33, a bail 57 (Figure 1) mounted on a handle 60 of the grass cutter is pulled in to pivot the brake actuator 51 by way of a brake cable 58. By this action, the brake pad 54 is disengaged from the groove in the pulley 43 and the idler arm 49 is pivoted toward the brake actuator 51 so that the idler pulley 50 engages and tensions the belt 48. The tension applied to the belt 48 is then sufficient to rotate the pulley 43 in the conventional manner. A suitable brake adjustment device 59 is provided on the handle 60.

In Figure 5, a bottom perspective view of the grass cutter, with the engine omitted is shown. The frame 20 comprises an enclosure with a top wall 61 and side walls 62 and 63, the bottom being open. A slot 64 is provided in each of the side walls.

As shown in Figure 4, each of the slots 64 has a longitudinal axis which is generally perpendicular to the axis of rotation A2 about which the axle 23 pivots. The axis A2 intersects the top wall 61 at a leading acute angle and intersects the ground surface at a trailing acute angle which is preferably 65 degrees. The complementary angle, i.e. 25 degrees, defines the preferred acute trailing angle of the longitudinal axis X and the top wall 61. By the relationship of the longitudinal axes of the slots 64 and the axis of rotation of the axle, the frame 20 acts to turn the axle 23 about the axis of rotation in response to a torque applied to the frame 20 about a longitudinal axis L of the frame. The resultant motion, in terms of positioning the cutting head 33 is to shift the cutting head to a position closer to one of the wheels 21 and to tilt the plane of cutting of the cutting head 33. In Figure 3, a front view of the machine is shown in which the frame 20 has been tilted and the cutting head 33 has been shifted.

The shifting of the cutting head is desired since the nylon cord is thus enabled to extend outside the path of travel of the respective wheel. The tilting of the frame is also a desired objective, since the cutting location will then be closer to the ground. In the position shown in Figure 3, it is possible to trim along the edge of a building or fence while travelling parallel therewith. It is also desirable to have the cutting plane tilt so that it is not parallel with the ground for the situation in which a cutting blade is used instead of a flexible cutting element. In this situation the angle of cut is advantageous since this prevents binding of the blade. The angle of intersection between the axis of rotation A2 and the top wall or ground can be changed with the result that the tilting of the frame with respect to the wheels will be decreased or increased accordingly. The ends of the slots 64 determine the extent to which the frame will swing from side to side. Increasing the length of the slots increases the distance that the cutting head can shift laterally. The extent to which the cutting head can be shifted, shown in Figure 2 as between a solid line position and a dashed line position, is intended to be illustrative of the positions which can be achieved by the frame and axle construction and not limitations of the extent to which the cutting head can swing left or right.

It is thus possible to position the cutting plane of the cutting head 33 parallel to the ground and mow a lawn as one would with a standard lawn mower. In addition, by tilting the handle 60, the cutting head 33 can be repositioned with respect to the wheels 21 and vegetation to be trimmed can be cut very close to the ground without scalping. As can be seen in Figure 1 the bumper 35 is provided with rounded edges so that tilting of the cutting head does not dig the cutting head into the ground.

To provide for tilting of the frame, the handle 60 is mounted to the frame 20 by handle clamp 65 positioned on either side of the axis of rotation A2. This allows an operator easily to tilt the frame from the mowing position to the plurality of trimming positions.

In use, it is intended that the weight of the engine and the frame be balanced over the wheels so that it is easy for the operator suitably to manoeuvre the forward end of the frame, where the cutting head 33 is located. It is advantageous, therefore, to provide the axle 23 with forwardly extended portions 66 so that the wheels are shifted more toward the front of the frame. Additionally, for the operator's safety a mud flap 67 is provided to prevent debris from being scattered back toward the operator. The mud flap 67 is attached to mud flap brackets 68, which are bolted to the frame 20.

In a second embodiment of the axle mount, shown in Figure 7, a detent is provided between axle 23 and frame 32. The axle mid-portion 26 is fixed to a flat washer 75 by welds 77, and the washer 75 is in turn fixed to rotate with a corrugated washer 71 that is in facing engagement with a second corrugated washer 70. The corrugated washers 70, 71 are urged together under the action of a spring 74, coaxially mounted on a bolt 72 and held in compression by a nut 73 and a flat washer 76. The corrugated washers 70 and 71 tend to nest together when angularly aligned thereby to provide a relatively stable position of adjustment between the frame and axle. For each corrugation a different position is provided, and in order to change the apparatus from one position to another position, the force of the spring acting on the facing washers must be overcome. This spring force is overcome by supplying a sufficient torque about the longitudinal axis L through the use of the handle 60. As the handle 60 is tilted the corrugations alternately nest and slide over one another to provide a series of incremented positions of adjustment between the frame and the axle.

## Claims

1. A grass cutter comprising:
a frame (20) having front and rear portions and a longitudinal axis (L) extending between the front and rear portions;
a rotary cutting head (33) rotatably mounted on the frame (20) at the front portion for rotating about a first axis of rotation (A1) so that the cutting head (33) has a cutting plane substantially perpendicular to the first axis of rotation (A1);
an axle (23) supported on ground engaging wheels (21, 22) at opposite ends of the axle (23);
a handle (60) connected to the frame (20) whereby torque can be applied to the frame (20) about the longitudinal axis (L); and
means for pivotally mounting the axle (23) to the frame (20) transversely of the longitudinal axis (L) about a second axis of rotation (A2);
**characterised by**
the frame (20) being provided with oppositely arranged slots (64) through which extend opposite end portions of the axle (23) to mount the axle (23) in the frame (20), which slots (64) extend from a position adjacent the bottom of the frame (20) upwardly in a longitudinal direction and at an oblique angle relative to the cutting plane of the cutting head (33); and
the axle (23) having a mid-portion (26) mounted to the frame (20) for pivoting the axle (23) with its opposite ends in the slots (64) about the second axis of rotation (A2) while said second axis of rotation (A2) is arranged substantially perpendicular to the longitudinal direction of the slots (64) so that the wheels (21,22) turn relative to the frame (20) in response to a torque applied to the frame (20) through the handle (60) about the longitudinal axis (L) whereby the grass cutter can be shifted between a mowing position wherein the cutting plane is positioned substantialy parallel to the ground and any one of a plurality of trimming positions wherein the cutting plane is positioned non-parallel to the ground.

2. A grass cutter accordinq to claim 1, wherein the frame (20) has a top wall (61) extending substantially parallel with the cutting plane and oppositely facing side walls (62) extending substantially perpendicularly downwardly from the top wall and being provided with the slots (64); and the second axis of rotation (A2) is so disposed that it intersects the plane that includes the top wall at an oblique angle.

3. A grass cutter according to claim 1 or claim 2, wherein, when the cutter is supported in an operable position on the surface of the ground, the second axis of rotation (A2) forms an acute trailing angle at the point of intersection with the surface of the ground.

4. A grass cutter according to any one of claims 1 to 3, wherein the mid-portion (26) for pivotally mounting the axle (23) to the frame (20) comprises a bolt (28) projecting outwardly and downwardly from the frame in axial alignment with the second axis (A2), a washer (27) supported for rotation on the bolt and a nut (29) threadedly received on the bolt such that the axle is fixed for rotation with the washer at the mid-portion of the axle.

5. A grass cutter according to any one of claims 1 to 4, wherein the mid-portion (26) for pivotally mounting the axle (23) to the frame (20) includes detent means (70,71,74) for applying a resisting torque between the axle (23) and the frame (20) such that the cutter is caused to remain in the mowing position or one of the plurality of trimming positions by the force of the resisting and such that the axle is able to pivot about the second axis of rotation (A2) when the torque applied to the frame through the handle (60) exceeds the resisting torque.

6. A grass cutter according to any one of claims 1 to 5, wherein each of the slots (64) is an elongate slot extending in the longitudinal direction from adjacent the rear portion of the frame (20) toward the front portion of the frame.

7. A grass cutter according to claim 3, wherein the acute angle is approximately 65°.

8. A grass cutter according to any one of claims 2 to 7, wherein the projection of the longitudinal direction of the slots (64) intersects the top wall (61) at an acute trailing angle.

9. A grass cutter according to any one of claims 1 to 8, wherein the cutting head (33) is associated with a motor (47) mounted on the frame (20) and having a downwardly extending drive shaft (46), a power take-off shaft (36) mounted on the frame and journalled for rotation with respect to the frame, a drive shaft pulley (45), a power take-off shaft pullery (43) and an endless flexible transmission belt (48) for transferring a driving torque from the drive shaft to the power take-off shaft, and wherein the cutting head extends downwardly from the bottom and is keyed to the power take-off shaft for rotation therewith.

10. A grass cutter according to claim 9, further including an idler pulley (50) in driven connection with the belt (48) for tensioning the belt and brake means (49 to 59) including a friction brake pad (54) biased toward the power take-off shaft pullery (43) for selective engagement therewith; and means for interconnecting the idler pulley and the brake means such that the brake means is selectively disengaged from the power take-off drive shaft pulley when the idler pulley means is engaged with the belt and is tensioning the belt.

11. A grass cutter according to any one of claims 1 to 10, wherein the cutting head (33) includes means for attaching flexible cutting elements (34) to the periphery of the cutting head.

12. A grass cutter according to claim 1, wherein in the mowing position the cutting head (33) is spaced equidistantly between the wheels (21,22) whereas in any one of the plurality of trimming positions the cutting head is shifted laterally toward one of the wheels in an arcuate path of travel so that it is closer to said one of the wheels than to the other of the wheels.

## Patentansprüche

1. Ein Rasenmäher umfassend
einen Rahmen (20) mit vorderen und hinteren Abschnitten und einer sich zwischen den vorderen und hinteren Abschnitten erstreckenden Längsachse (L);
einen drehbar auf dem Rahmen (20) im vorderen Abschnitt angebrachten, drehenden Schneidkopf (33) zur Drehung um eine erste Drehachse (A1) derart, daß der Schneidkopf (33) eine im wesentlichen zu der ersten Drehachse (A1) senkrechte Schnittebene aufweist;
eine Achse (23), die an gegenüberliegenden Enden der Achse (23) an mit dem Boden in Kontakt befindlichen Rädern (21, 22) abgestützt ist;
eine mit dem Rahmen (20) verbundene Haltestange (60), durch die auf den Rahmen (20) ein Moment um die Längsachse (L) aufgebracht werden kann; und
Mittel zum schwenkbaren Anbringen der Achse (23) an dem Rahmen (20) quer zur Längsachse (L) um eine zweite Drehachse (A2),
**gekennzeichnet dadurch**, daß
der Rahmen (20) mit gegenüberliegend angeordneten Schlitzen (64) versehen ist, durch die sich gegenüberliegende Endabschnitte der Achse (23) erstrecken, um die Achse (23) in dem Rahmen (20) anzubringen, wobei sich die Schlitze (64) von einer Stelle in der Nähe der Unterseite des Rahmens (20) relativ zur Schnittebene des Schneidkopfes (33) schiefwinklig und in einer Längsrichtung nach oben erstrecken; und
daß die Achse (23) einen in dem Rahmen (20) zum Verschwenken der Achse (23) mit ihren gegenüberliegenden Enden in den Schlitzen (64) um die zweite Drehachse (A2) angebrachten Mittelabschnitt (26) aufweist, während die zweite Drehachse (A2) im wesentlichen senkrecht zur Längsrichtung der Schlitze (64) angeordnet ist, so daß die Räder (21, 22) als Ergebnis eines auf den Rahmen (20) durch die Haltestange (60) um die Längsachse (L) ausgeübten Moments relativ zum Rahmen (20) schwenken, wodurch der Rasenmäher zwischen einer Mähposition, in der sich die Schnittebene im wesentlichen parallel zum Boden befindet, und irgendeiner einer Vielzahl von Trimmpositionen, in der sich die Schnittebene nicht parallel zum Boden befindet, verstellt werden kann.

2. Ein Rasenmäher nach Anspruch 1, bei dem der Rahmen (20) eine obere Wand (61), die sich im wesentlichen parallel zur Schnittebene erstreckt, und entgegengesetzt liegende Seitenwände (62), die sich im wesentlichen senkrecht von der oberen Wand nach unten erstrecken und mit den Schlitzen (64) versehen sind, aufweist, und die zweite Drehachse (A2) so gelegt ist, daß sie die die obere Wand einschließende Ebene schiefwinklig schneidet.

3. Ein Rasenmäher nach Anspruch 1 oder 2, bei dem die zweite Drehachse (A2), wenn der Mäher in einer Arbeitsposition auf der Bodenoberfläche abgestützt ist, am Schnittpunkt mit der Bodenoberfläche einen spitzen Nacheilwinkel bildet.

4. Ein Rasenmäher nach einem der Ansprüche 1 bis 3, bei dem der Mittelabschnitt (26) zur drehbaren Anbringung der Achse (23) an dem Rahmen (20) einen vom Rahmen nach außen und nach unten in axialer Ausrichtung mit der zweiten Achse (A2) vorspringenden Bolzen (28), eine zur Drehung an dem Bolzen gehaltene Scheibe (27) und eine durch Gewinde auf dem Bolzen aufgenommene Mutter (29) umfaßt, so daß die Achse zur Drehung mit der Scheibe im Mittelabschnitt der Achse fest angebracht ist.

5. Ein Rasenmäher nach einem der Ansprüche 1 bis 4, bei dem der Mittelabschnitt (26) zur drehbaren Anbringung der Achse (23) an dem Rahmen (20) Arretierungsmittel (70, 71, 74) zum Aufbringen eines Widerstandsmoments zwischen der Achse (23) und dem Rahmen (20) einschließt, derart, daß der Mäher veranlaßt wird, in der Mähposition oder einer der Vielzahl Trimmpositionen durch die Wirkung des Widerstandsmoments zu verharren, und derart, daß die Achse imstande ist, um die zweite Drehachse (A2) zu schwenken, wenn das auf den Rahmen durch die Haltestange (60) aufgebrachte Moment das Widerstandsmoment überschreitet.

6. Ein Rasenmäher nach einem der Ansprüche 1 bis 5, bei dem jeder der Schlitze (64) ein langgestreckter Schlitz ist, der sich in Längsrichtung aus der Nähe des hinteren Abschnitts des Rahmens (20) bis zum vorderen Abschnitt des Rahmens erstreckt.

7. Ein Rasenmäher nach Anspruch 3, bei dem der spitze Winkel ungefähr 65° beträgt.

8. Ein Rasenmäher nach einem der Ansprüche 2 bis 7, bei dem die Verlängerung der Längsrichtung der Schlitze (64) die obere Wand (61) in einem spitzen Nacheilwinkel schneidet.

9. Ein Rasenmäher nach einem der Ansprüche 1 bis 8, bei dem der Schneidkopf (33) mit einem auf dem Rahmen (20) angeordneten Motor (47) verbunden ist, der eine nach unten gerichtete Antriebswelle (46), eine auf dem Rahmen angebrachte und zur Drehung in bezug auf den Rahmen drehbar gelagerte Zapfwelle (36), eine Antriebswellenscheibe (45), eine Zapfwellenscheibe (43) und einen endlosen, flexiblen Treibriemen (48) zur Übertragung des Antriebsmoments von der Antriebswelle auf die Zapfwelle aufweist, und bei dem sich der Schneidkopf von der Unterseite nach unten erstreckt und mit der Zapfwelle verkeilt ist, um sich mit dieser zu drehen.

10. Ein Rasenmäher nach Anspruch 9, der ferner eine Spannrolle (50) in angetriebener Verbindung mit dem Treibriemen (48) zum Spannen des Treibriemens und Bremsmittel (49 bis 53) umfaßt, die eine gegen die Zapfwellenscheibe (43) zum wahlweisen Eingriff mit dieser beaufschlagte Reibungsbremsbacke (54) einschließen, sowie
Mittel zum Zusammenschalten der Spannrolle und der Bremsmittel derart, daß die Bremsmittel selektiv von der Zapfwellenscheibe außer Eingriff gebracht werden, wenn die Spannrollenmittel mit dem Treibriemen in Eingriff gebracht sind und den Treibriemen spannen.

11. Ein Rasenmäher nach einem der Ansprüche 1 bis 10, bei dem der Schneidkopf (33) Mittel zum Befestigen flexibler Schneidelemente (34) am Umfang des Schneidkopfes einschließt.

12. Ein Rasenmäher nach Anspruch 1, bei dem der Schneidkopf (33) in der Mähposition in gleichweit entferntem Abstand zwischen den Rädern (21, 22) angeordnet ist, während der Schneidkopf in einer der Vielzahl der Trimmpositionen seitlich zu einem der Räder in einer bogenförmigen Bewegungsbahn verschoben wird, so daß er näher zu einem der Räder ist als zu dem anderen.

## Revendications

1. Tondeuse à gazon comportant :
un châssis (20) comportant des parties avant et arrière et un axe longitudinal (L) s'étendant entre les parties avant et arrière;
une tête de coupe rotative (33) montée en rotation sur le châssis (20) à la partie avant pour tourner autour d'un premier axe de rotation (A1), de sorte que la tête de coupe (33) ait un plan de coupe sensiblement perpendiculaire au premier axe de rotation (A1);
un arbre (23) porté par des roues (21,22) coopérant avec le sol, disposées aux extrémités opposées de l'arbre (23);
une poignée (60) connectée au châssis (20) de sorte qu'un couple puisse être appliqué au châssis (20) selon l'axe longitudinal (L); et
des moyens pour monter en pivotement l'arbre (23) sur le châssis (20) transversalement par rapport à l'axe longitudinal (L) selon un second axe de rotation (A2);
caractérisée par le fait que
le châssis (20) comporte des fentes disposées en opposition (64) à travers lesquelles s'étendent des parties d'extrémité opposées de l'arbre (23) pour que celui-ci soit monté dans le châssis (20), lesquelles fentes (64) s'étendent d'une position qui se trouve au voisinage de la base du châssis (20) vers le haut dans une direction longitudinale et suivant un angle oblique par rapport au plan de coupe de la tête de coupe (33); et
l'arbre (23) a une partie médiane (26) qui est montée sur le châssis (20) pour provoquer le pivotement de l'arbre (23) avec ses extrémités opposées disposées dans les fentes (64) par rapport au second axe de rotation (A2) alors que ledit second axe de rotation (A2) est disposé sensiblement perpendiculaire à la direction longitudinale des fentes (64) de sorte que les roues (21,22) tournent par rapport au châssis (20) sous l'action d'un couple appliqué au châssis (20) par l'intermédiaire de la poignée (60) selon l'axe longitudinal (L), de sorte que la tondeuse peut être déplacée entre une position de tonte dans laquelle le plan de coupe est positionné sensiblement parallèle au sol, et l'une quelconque d'un ensemble de positions de découpe dans lesquelles le plan de coupe est positionné sans être parallèle au sol.

2. Tondeuse à gazon selon la revendication 1, dans laquelle le châssis (20) comporte une paroi de sommet (61) qui s'étend sensiblement parallèlement au plan de coupe et des parois latérales qui se font face (62) et s'étendent sensiblement perpendiculairement vers le bas à partir de la paroi de sommet et comportent des fentes (64); et le second axe de rotation (A2) est disposé de telle sorte qu'il coupe le plan qui comporte la paroi de sommet selon un angle oblique.

3. Tondeuse à gazon selon l'une des revendications 1 ou 2, dans laquelle, lorsque la tondeuse est supportée dans une position de fonctionnement sur la surface du sol, le second axe de rotation (A2) fait un angle aigu de fuite au point d'intersection avec la surface du sol.

4. Tondeuse à gazon selon l'une quelconque des revendications 1 à 3, dans laquelle la partie médiane (26) prévue pour assurer le pivotement de l'arbre (23) par rapport au châssis (20) comporte un boulon (28) faisant saillie vers l'extérieur et vers le bas à partir du châssis en alignement axial avec le second axe (A2), une rondelle (27) supportée pour tourner sur le boulon et un écrou (29) vissé sur le boulon, de telle sorte que l'arbre est fixé pour tourner avec la rondelle selon la partie médiane de l'arbre.

5. Tondeuse à gazon selon l'une quelconque des revendications 1 à 4, dans laquelle la partie médiane (26) permettant le montage en pivotement de l'arbre (23) sur le châssis (20) comporte des moyens à déclic (70,71,74) pour appliquer un couple résistant entre l'arbre (23) et le châssis (20) de telle sorte que la tondeuse est amenée à rester dans la position de tonte ou dans une d'un ensemble de positions de découpe par la force du couple résistant et ainsi, permettre que l'arbre puisse pivoter par rapport au second axe de rotation (A2) lorsque le couple appliqué au châssis par l'intermédiaire de la poignée (60) dépasse le couple résistant.

6. Tondeuse à gazon selon l'une quelconque des revendications 1 à 5, dans laquelle chacune des fentes (64) est une fente allongée s'étendant dans la direction longitudinale à partir du voisinage de la partie arrière du châssis (20) vers la partie avant du châssis.

7. Tondeuse à gazon selon la revendication 3, dans laquelle l'angle aigu est d'environ 65°.

8. Tondeuse à gazon selon l'une quelconque des revendications 2 à 7, dans laquelle le prolongement de la direction longitudinale des fentes (64) vient couper la paroi de sommet (61) selon un angle de fuite aigu.

9. Tondeuse à gazon selon l'une quelconque des revendications 1 à 8, dans laquelle la tête de coupe (33) est associée à un moteur (47) monté sur le châssis (20) et comportant un arbre d'entraînement s'étendant vers le bas (46), un arbre de prise de force (36) monté sur le châssis et pivotant par rapport au châssis, une poulie d'arbre d'entraînement (45), une poulie d'arbre de prise de force (43) et une courroie de transmission souple sans fin (48) pour transférer le couple d'entraînement de l'arbre d'entraînement à l'arbre de prise de force, et dans laquelle la tête de coupe s'étend vers le bas à partir de la partie inférieure et se trouve clavetée à l'arbre de prise de force pour tourner avec celui-ci.

10. Tondeuse à gazon selon la revendication 9, comportant en outre une poulie folle (50) qui est connectée en entraînement au moyen de la courroie (48) pour mettre en tension la courroie et des moyens de freinage (49 à 53) comportant un patin de frein à friction (54) sollicité vers la poulie de l'arbre de prise de force (43) pour coopérer sélectivement avec celle-ci; et
des moyens pour interconnecter la poulie folle et les moyens de freinage de telle sorte que les moyens de freinage soient déconnectés de façon sélective de la poulie d'arbre d'entraînement de prise de force lorsque la poulie folle coopère avec la courroie et provoque la tension de la courroie.

11. Tondeuse à gazon selon l'une quelconque des revendications 1 à 10, dans laquelle la tête de coupe (33) comporte des moyens pour fixer des éléments de coupe souples (34) à la périphérie de la tête de coupe.

12. Tondeuse à gazon selon la revendication 1, dans laquelle, lorsque l'on se trouve dans la position de tonte, la tête de coupe (33) est placée à même distance entre les roues (21,22), alors que dans l'une quelconque de l'ensemble des positions de découpe la tête de coupe est décalée latéralement vers l'une des roues selon un trajet arqué, de telle sorte qu'elle se trouve plus près de ladite des roues que de l'autre des roues.
